# EUROPÄISCHE PATENTSCHRIFT

(11) **EP 3 523 101 B1**
(45) Veröffentlichungstag und Bekanntmachung des Hinweises auf die Patenterteilung: **08.09.2021**
(21) Anmeldenummer: 17808747.4
(22) Anmeldetag: 02.10.2017
(51) Int. Cl.: B25J 9/16, B25J 15/02, B23Q 7/04, B23Q 17/00, B25J 13/08

(54) **GREIFVORRICHTUNG MIT SCHALTMODUL**
GRIPPING DEVICE HAVING A SWITCHING MODULE
DISPOSITIF DE PRÉHENSION MUNI D'UN MODULE DE COMMUTATION

(30) Priorität: 04.10.2016 DE 102016011761
(43) Veröffentlichungstag der Anmeldung: 14.08.2019
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2017/000328
(87) Internationale Veröffentlichungsnummer: WO 2018/064995

(56) Entgegenhaltungen:
- EP-A1- 2 286 964
- DE-A1- 3 640 689
- DE-A1-102007 055 460
- US-A1- 2014 156 066
- US-B1- 6 463 835

## Beschreibung

Die Erfindung betrifft eine Greifvorrichtung mit bewegliche Greifelemente tragenden Schlitten oder Schwenkarmen, wobei die Schlitten oder Schwenkarme in einem Grundkörper - zwischen einer Öffnungs- und Schließstellung - gelagert und geführt und mittels mindestens einer Zylinder-Kolben-Einheit antreibbar sind.

Aus der DE 10 2015 004 404 A1 ist eine derartige Greifvorrichtung bekannt. Ihr Gehäuse mit der integrierten antreibenden Zylinder-Kolben-Einheit wird von außen über zwei Pneumatikleitungen mit Druckluft versorgt. Von einem angebauten Positionsgeber führt ebenfalls ein Signalkabel weg. Die für die Beschaltung der Zylinder-Kolben-Einheit erforderlichen Ventile sind in einem extern angeordneten Schaltschrank untergebracht. Die Ansteuerung der Greifvorrichtung erfolgt von dort aus.

Die DE 10 2007 055 460 A1 beschreibt einen an einem Verbraucher anbaubaren Ventilblock. Der Ventilblock ist über eine Druckluftleitung und mehrere Kabel mit einem Schaltschrank verbunden. Der Ventilblock ist mit dem Verbraucher über Verbindungsmittel angeordnet, die gleichzeitig eine mechanische und eine pneumatische Verbindung herstellen.

Aus der DE 36 40 689 A1 ist ein Robotergreifer bekannt, in dessen Gehäuse ein Druckzylinder als Aktor und eine Steuerungseinheit untergebracht sind. Die Bauteile der Steuerungseinheit umgeben jeweils einzeln befestigt dabei den Druckzylinder, wodurch eine optimale Raumausnutzung und eine gute Kühlwirkung erzielt werden.

Der vorliegenden Erfindung liegt die Problemstellung zugrunde, eine Greifvorrichtung zu entwickeln, die mit einem minimalen Verschaltungs- und Programmieraufwand zumindest an eine Maschinensteuerung adaptierbar ist. Auch soll die Handhabung und die Anpassung an verschiedene Greifaufgaben erleichtert werden.

Die Erfindung ist in den Ansprüchen definiert.

Das Schaltmodul ist als einfach austauschbare Einheit aufgebaut. Seine Geometrieform ist so ausgelegt, dass es innerhalb einer Greifertypengruppe beliebig adaptierbar ist. Für verschiedene Greifertypengruppen, die über unterschiedliche Hubwege und Greifkräfte verfügen, gibt es jeweils eigene Modulgehäuse. Der Grundkörper der einzelnen Greifvorrichtung hat eine primäre Adapterfläche, über die er bisher an dem greifvorrichtungstragenden Maschinenteil befestigbar war. An dieser Adapterfläche, die zugleich die Grundkörperunterseite ist, wird das Schaltmodul - in der Regel durch einfaches Anschrauben - adaptiert. Auf diese Weise ist die Greifvorrichtung mit der Maschinensteuerung nur noch über ein Kabel und eine Druckluft- oder Hydraulikleitung verbunden. Dabei liegen das Kabel und die Fluidleitung nahe beieinander, so dass sie bauraumsparend in einer gemeinsamen Kabelhülle entlang der sie tragenden Arme der Handhabungsgeräte geführt werden können.

Alle Schaltmodule dienen - unabhängig von dem Lagerungstyp der Greifelemente - der elektrischen Ansteuerung von pneumatischen oder hydraulischen Greifvorrichtungen.

Wird als Greifvorrichtung z.B. ein Parallel- oder ein Mehrfingergreifer verwendet, können die für die Führung der Greifelemente im Greifergehäuse verwendeten Schlitten quer zu ihrer Hubrichtung fast beliebige Querschnitte haben. Neben dem im Ausführungsbeispiel gezeigten Querschnitt sind u.a. auch rechteckige, runde, ovale und sägezahnartige Querschnitte denkbar. Die Schlitten sind quer zur Greifrichtung allseitig abstützend gelagert. Sie können z.B. auch hintereinander in nur einer Führungsschiene, -nut oder -bohrung gelagert sein.

Sind die Greifvorrichtungen z.B. Winkelgreifer, sitzen die in der Regel austauschbaren Greifelemente auf als Schwenkarme ausgebildete Greifelementeträgern.

Angetrieben werden die Schlitten - oder bei Winkelgreifern die Greifelementeträger - beispielsweise über mehrere hintereinander angeordnete Getriebe, z.B. ein Stirnradgetriebe, ein Schneckengetriebe und ein Spindel- oder Kurvengetriebe. Anstelle dieser Getriebe, oder zusätzlich zu diesen, können auch Schiebekeilgetriebe, Keilhakengetriebe, Hebel-, Kulissen- oder Zugmittelgetriebe eingesetzt werden. Dabei können die Greifvorrichtungen sowohl in Außen- als auch in Innengreifern verwendet werden.

Weitere Einzelheiten der Erfindung ergeben sich aus den Unteransprüchen. Es folgt eine Beschreibung eines schematisch dargestellten Ausführungsbeispiels.
- Figur 1:: Perspektivische Ansicht eines Parallelgreifers mit angebautem Schaltmodul;
- Figur 2:: Explosionsdarstellung des Schaltmoduls;
- Figur 3:: wie Figur 1, jedoch ohne Schaltmodul;
- Figur 4:: Längsschnitt durch den Parallelgreifer nach Figur 1, jedoch mit Greifbacken. Der rechte Greifbacken ist geöffnet;
- Figur 5:: Perspektivische Ansicht des Kolbens ohne Kolbendichtung von unten;
- Figur 6:: Perspektivische Ansicht der Schlitten, der Führungsabdichtungen und des Doppelkeils von oben;
- Figur 7:: Perspektivische Ansicht der Schlitten, der Führungsabdichtungen und des Doppelkeils von unten;
- Figur 8:: Pneumatikschaltplan mit Druckbegrenzungsventil;
- Figur 9:: Pneumatikschaltplan mit Proportionalregler;
- Figur 10:: Übersicht über die Hard- und/oder Softwarebaugruppen eines individuellen Antriebs mit einem in der Greifvorrichtung untergebrachten individuellen Regler.

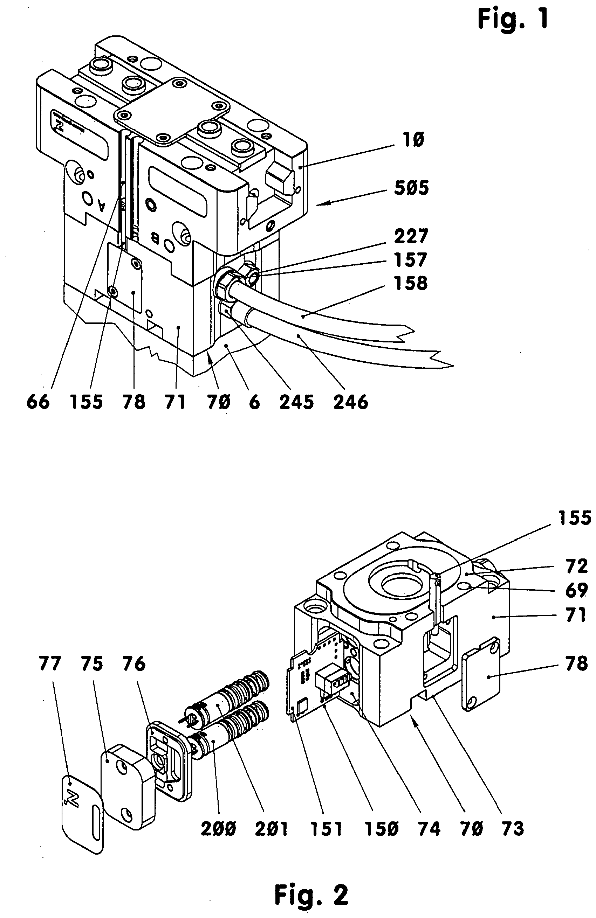

Die Figur 1 bis 4 zeigen eine Parallelgreifvorrichtung mit zwei jeweils auf Schlitten (100, 101) sitzenden Greifbacken (1, 2). Die in ihrer Längsrichtung beweglichen Schlitten (100, 101) sind in einem Gehäuse bzw. Grundkörper (10) in einer Führungsnut (20) z.B. gleitgelagert geführt. Das die Führungsnut (20) aufnehmende Gehäuse (10) umgibt ferner eine z.B. doppeltwirkende Zylinder-Kolben-Einheit (120). Die Zylinder-Kolben-Einheit wirkt über ein Doppelschiebekeilgetriebe (80) auf die Schlitten (100, 101). Unterhalb des Grundkörpers (10) ist ein Schaltmodul (70), angeordnet, über das u.a. das der Greifvorrichtung zugeführte Druckmittel elektronisch gesteuert der Zylinder-Kolben-Einheit (120) zugeführt wird. Nach Figur 1 ist die Parallelgreifvorrichtung über das dem Grundkörper (10) vorgeschaltete Schaltmodul (70) auf einem sie tragenden Maschinen- bzw. Handhabungsgeräteteil (6) montiert. Einige Teile der Greifvorrichtung werden zur Erzielung einer hochgenauen Schlittenführung ggf. verstellbar ausgeführt oder durch präzise - nach eng tolerierten Maßen - vorsortierte Teile zusammengestellt.

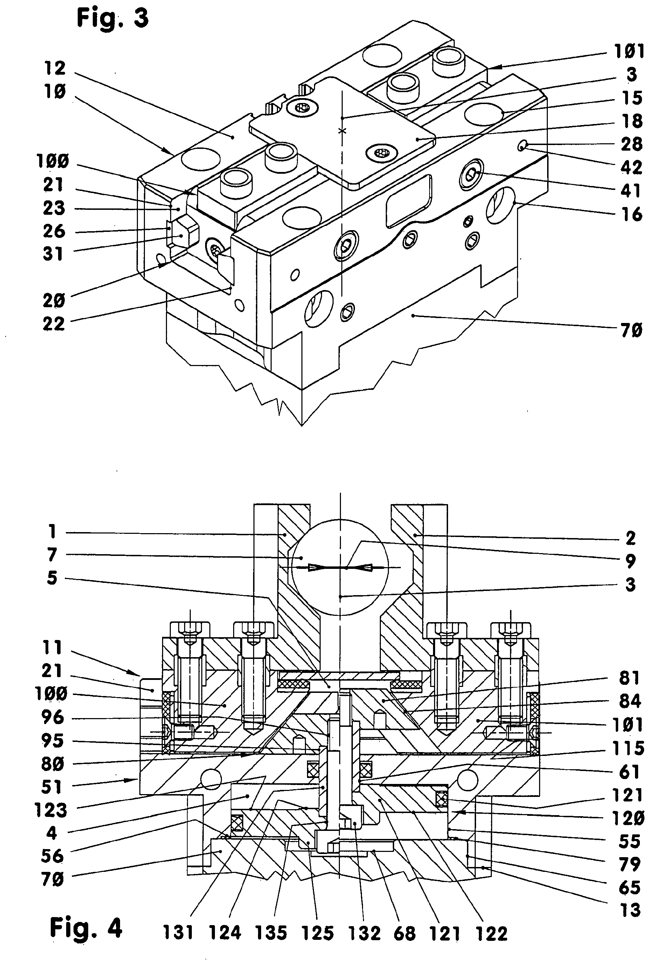

Die Figur 4 stellt die Parallelgreifvorrichtung im Teillängsschnitt mit zwei aufgeschraubten Greifbacken (1, 2) dar. Die Greifbacken sollen ein z.B. zylinderförmiges Werkstück (7) greifen. Der Greifbacken (1) der linken Vorrichtungsseite liegt am Werkstück (7) an, während der Greifbacken (2) der rechten Vorrichtungsseite in geöffneter Position dargestellt ist. Im Gegensatz zur Darstellung nach Figur 4 bewegen sich die Greifbacken (1, 2) getriebebedingt immer zwangsläufig synchron aufeinander zu oder voneinander weg.

Der z.B. im Wesentlichen quaderförmige Grundkörper (10) der Parallelgreifvorrichtung besteht aus einem oberen Führungsabschnitt (11) und einem unteren Antriebsabschnitt (51). Er ist beispielsweise aus der Aluminiumlegierung AlMgSi1 gefertigt. Die Länge des Grundkörpers (10) ist z.B. fast doppelt so lang wie seine Breite und die Grundkörperhöhe. Im Ausführungsbeispiel ist der Grundkörper (10) 50 mm lang. Bei dieser Baugröße beträgt der maximale Hub jedes Schlittens (100, 101) bzw. Greiferbackens (1, 2) z.B. 2,625 mm.

Der Führungsabschnitt (11) nimmt zentral die nach oben - zu den Greifelementen (1, 2) hin - offene Führungsnut (20) auf, deren z.B. rechteckiger Querschnitt eine Breite von 10,7 mm und Höhe von 9,3 mm misst. In den planen Seitenwandungen (23, 24) der Führungsnut (20) ist jeweils eine flache Schienenführungsnut (26) zur späteren Aufnahme einer Führungsschiene (31, 32) eingearbeitet. Die einzelne Schienenführungsnut (26) hat einen rechteckigen Querschnitt, einen planen Nutgrund und z.B. plane Seitenwandungen. Die Schienenführungsnuten (26) erstrecken sich hier über die gesamte Länge des Grundkörpers (10).

Jede Führungsschiene (31, 32) ist hier eine aus einem nichtrostenden Stahl, z.B. aus einem X90CrMoV18, gefertigte, im Wesentlichen trapezförmige Stange. Die Breite der sich z.B. über die Länge des Grundkörpers (10) erstreckende Führungsschiene (31, 32) beträgt im Ausführungsbeispiel 4 mm. Die Höhe der Führungsschiene (31, 32) misst 75% ihrer Breite. Aufgrund der hohen Festigkeit einer derartigen Führungsschiene (31, 32) können die Schlitten größere Momente auf den Grundkörper (10) übertragen. Demzufolge kann die Greifvorrichtung große Greifkräfte auf das aufzunehmende Werkstück (7) ausüben. Die einzelne Führungsschiene (31, 32) hat einen sechseckigen Querschnitt und weist zwei einander spiegelsymmetrisch gegenüberliegende Tragflanken auf.

Mindestens eine der Führungsschienen (31, 32) weist mittig eine - hier nicht dargestellte - Quernut auf. Letztere dient der zusätzlichen verschleißfesten Führung des im Doppelschiebekeilgetriebe (80) verwendeten Doppelschiebekeils (81). Ggf. können die einzelnen Führungsschienen (31, 32) auch aus zwei oder mehreren hintereinander angeordneten Abschnitten aufgebaut sein. Im Ausführungsbeispiel sind die Führungsschienen (31, 32) jeweils mit zwei Senkschrauben (41) am Grundkörper (10) befestigt, vgl. Figur 3. Vorab werden die Führungsschienen (31, 32) jeweils mit Hilfe von zwei Passstiften (42) am Grundkörper (10) positioniert.

Der unterhalb des Führungsabschnittes (11) gelegene Antriebsabschnitt (51) nimmt im Wesentlichen die Zylinder-Kolben-Einheit (120) und die betätigungsmittelführenden Kanäle und Durchbrüche auf. In den seitlichen Bereichen unterhalb des Führungsabschnittes (11) ist der Grundkörper (10) beidseitig um circa 12 % der Gesamtgrundkörperlänge auf einer Höhe von 38,3 % der Grundkörpergesamthöhe verkürzt ausgebildet.

Die Unterseite des Grundkörpers (10) hat eine z.B. 3,5 mm tiefe, z.B. 12-eckige Modulgehäuseausnehmung (65). Die Schaltmodulausnehmung erstreckt sich von der vorderen bis zur hinteren Längsseitenwandung des Grundkörpers (10). Von der Modulgehäuseausnehmung (65) aus ragt eine z.B. 7 mm tiefe Zylinderausnehmung (55) in den Grundkörper (10) in Richtung der Führungsnut (20) hinein, vgl. Figur 4. Die Zylinderausnehmung (55) hat hier einen ovalen Querschnitt, dessen Länge z.B. 54 % der Grundkörpergesamtlänge entspricht. Die Breite der Zylinderausnehmung (55) misst z.B. 53,7 % ihrer Länge. Die beiden Radien des ovalen Querschnitts entsprechen der halben Breite der Zylinderausnehmung (55). Um die Zylinderausnehmung (55) herum befindet sich eine umlaufende Dichtsitzvertiefung (56) mit planem Grund. In der Dichtsitzvertiefung (56) liegt eine Flachdichtung (79).

Im Zentrum des Bodens der Zylinderausnehmung (55) befindet sich eine Durchgangsbohrung (61), die die Zylinderausnehmung (55) mit der Führungsnut (20) verbindet. Mittig weist die Durchgangsbohrung (61) einen Einstich zur Aufnahme eines Kolbenstangendichtringes auf.

Zur Befestigung des Grundkörpers (10) an einem Maschinenschlitten (6) verfügt dieser über vier vertikale Bohrungen (15) und zwei Querdurchgangsbohrungen (16). In Figur 3 werden speziell die vertikalen Bohrungen (15) zur Befestigung benutzt. Bis auf zwei einander diagonal gegenüberliegende Bohrungen sind alle anderen Befestigungsbohrungen (15, 16) mit den zu den jeweiligen Befestigungsschrauben passenden Senkungen ausgestattet.

Der Grundkörper (10) weist auf der in Figur 1 dargestellten großen Seitenwandung im mittleren Bereich zwei auch zu dieser Seitenwandung hin offene, kanalartige Sensorausnehmungen (66) auf. Ihre Mittellinien sind parallel zur Mittellinie (3) der Vorrichtung orientiert. Ihre großteils u-förmigen Querschnitte werden im Bereich der Seitenwandung durch beidseits - als Fixierschutz für einsetzbare Kolbenpositionssensoren (155) - vorspringende Hintergriffe verengt. Mindestens eine der Sensorausnehmungen (66) setzt sich bis in das Schaltmodul (70) fort.

An der Grundkörperunterseite (13) ist das Schaltmodul (70) über seine Oberseite (72) adaptiert. Das aus einer Aluminium-Silizium-Legierung gefertigte Schaltmodul (70) hat ein im Wesentlichen quaderförmiges Modulgehäuse (71), dessen senkrecht zur Mittellinie (3) gelegener Querschnitt dem Querschnitt entspricht, den der Grundkörper (10) im unteren Bereich der Zylinderausnehmung (55) aufweist. Die Höhe des Modulgehäuses (71) misst im Ausführungsbeispiel 35,5 mm.

Die Oberseite (72) des formsteifen Modulgehäuses (71) passt wie ein Deckel mit geringem Spiel in die 12-eckige Modulgehäuseausnehmung (65), vgl. Figur 4. Sie hat zentral eine zweistufige Vertiefung (68), in die der Kolben (121) des pneumatischen Antriebs (80) in der Greiferschließstellung partiell hineinragen kann. Um die Vertiefung (68) sind vier Befestigungsbohrungen (69) angeordnet, über die das Modulgehäuse (71) mit dem Grundkörper (10), unter Zwischenlage der Flachdichtung (79), dicht mit vier Zylinderschrauben verschraubt wird. Zur Aufnahme der Schraubenköpfe der Zylinderschrauben weist das Modulgehäuse (71) Senkungen oder Einfräsungen auf, die in den Bereich der Längsseitenwandungen reichen, vgl. Figuren 1 und 2.

Nach Figur 2 hat das Modulgehäuse (71) eine nach links sich öffnende Ausnehmung (74), u.a. zur Aufnahme des Rechner- und Speichermoduls (150), der Pneumatikventile (200, 201), ggf. der Ventile (251, 252), des Drucksensors (180) und der ggf. vorhandenen Anzeige-LED's einschließlich ihrer Ansteuerung. Die linke Öffnung der Ausnehmung (74) wird durch einen transparenten Plexiglasdeckel (75) verschlossen, der großteils - mit Ausnahme der Öffnungen für die Anzeige-LED's - mit einer Deckelblende (77) abgedeckt ist.

Unter dem Plexiglasdeckel (75) ist in der Ausnehmung (74) ein Haltedeckel (76) angeordnet, der zum einen in je einer Bohrung der Ausnehmung (74) ein Patronenventil (200, 201) fixiert und zum anderen als Halterung für die Anzeige-LED's dient. Vor den Patronenventilen (200, 201) und hinter dem Haltedeckel (76) ist in der Ausnehmung (74) die das Rechner- und Speichermodul (150) aufnehmende Steuerplatine (151) angeordnet.

Die in Figur 2 nach rechts orientierte Frontöffnung der Ausnehmung (74) ist mit einem Frontdeckel (78) verschlossen. Über die Frontöffnung lässt sich u.a. der Positionsgeber (155) an der Steuerplatine (151) anschließen.

In dem von der Zylinderausnehmung (55) des Grundkörpers (10) und der Oberseite des pneumatisch als Deckel wirkenden Modulgehäuses (71) umgebenen Zylinderinnenraum (4) ist ein ovaler Kolben (121) mit seiner zweiteiligen Kolbenstange (131, 132) angeordnet. Der Zylinderinnenraum (4) und der Kolben (121) bilden z.B. eine pneumatische Zylinder-Kolben-Einheit. Der Kolben (121), dessen mittlere Wandstärke im Ausführungsbeispiel weniger als ein Sechstel der Grundkörperhöhe beträgt, hat zentral eine dreistufige Durchgangsbohrung (135), wobei die mittlere Stufe den kleinsten Durchmesser von z.B. 3,2 mm aufweist.

Die kolbenstangenseitige Bohrungsstufe hat zur Aufnahme einer Kolbenstangenhülse (131) einen Durchmesser von 5 mm. Um die Durchgangsbohrung (135) herum hat der Kolben (121) dort einen 0,2 mm hohen scheibenförmigen Vorsprung (124), der als oberer Anschlag des Kolbens (121) dient. Sein zylindrischer Rand kann auch der Innenführung einer Schraubendruckfeder dienen.

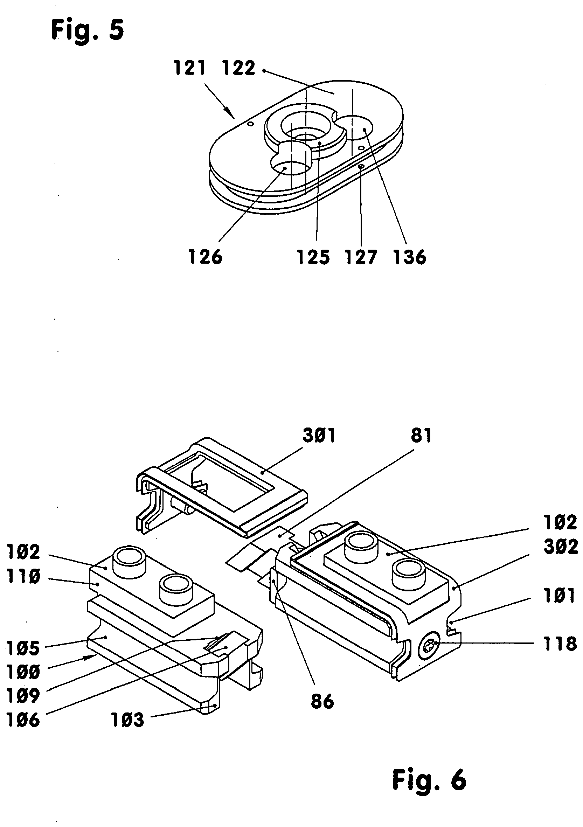

Der ovale Kolben (121), vgl. Figur 5, besitzt zur Abdichtung gegenüber der Zylinderausnehmungswandung des Grundkörpers (10) einen umlaufenden, in einer Dichtnut gelagerten Quaddichtring. Im Bereich der Dichtnut weist der Kolben (121) mindestens eine Druckausgleichsbohrung (127) auf, deren Mittellinie z.B. parallel zur Mittellinie (3) verläuft und die den Kolben (121) im Bereich der Dichtnut schneidet. Über die mindestens eine Druckausgleichsbohrung (127), deren Durchmesser z.B. 0,7 mm beträgt, gelangt während der Druckluftzufuhr die Druckluft vor den Quaddichtring, um diesen sicher und schnell an der dem Überdruck abgewandten Nutflanke der Dichtnut anzulegen.

Die Kolbenbodenseite (122), vgl. Figur 5, weist ebenfalls einen Vorsprung (125) auf, in dessen zentraler Senkung der Kopf der Kolbenstangenschraube (132) sitzt. Der Kolben (121) hat im vorderen Bereich des Vorsprungs (125) zwei Sacklochbohrungen (126). In diese Sacklochbohrungen werden bei Bedarf Scheibenmagnete (136) für die Kolbenpositionsüberwachung eingeklebt.

Die Kolbenstange (131, 132) besteht hier aus der Kolbenstangenschraube (132), z.B. eine Senkkopfschraube, und einer auf ihr aufgesteckten Kolbenstangenhülse (131). Diese beiden Teile bilden zusammen mit dem Kolben (121) und dem Doppelschiebekeil (81) des Doppelschiebekeilgetriebes (80) eine formsteife Baugruppe, sobald die Kolbenstangenschraube (132) mittig in eine Senkbohrung (95) des Doppelschiebekeils (81) eingesteckt und in der an die Senkbohrung anschließende Gewindebohrung (96) festgeschraubt wird.

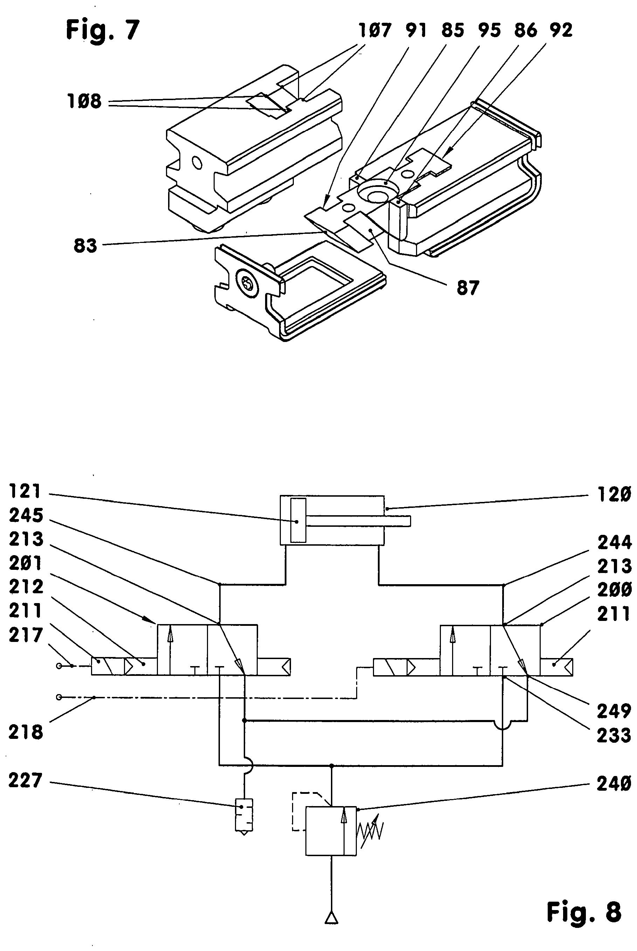

Der Doppelschiebekeil (81), der in der Führungsnut (20) als Teil eines Doppelschiebekeilgetriebes (80) angeordnet ist, ist im Wesentlichen ein vierkantstabartiges Bauteil mit quadratischem Querschnitt. In seinem mittleren Bereich ist beidseitig jeweils ein seitlich senkrecht abstehender Stützsteg (85, 86) angeformt, vgl. Figuren 6 und 7. Der Stützsteg (85, 86), der sich parallel zur Mittellinie (3) über die gesamte Doppelschiebekeilhöhe erstreckt, ist z.B. 1,2 mm breit. Er steht z.B. 1,8 mm über seine Quadergrundform über.

Der Doppelschiebekeil (81) weist an seinen stirnseitigen Enden jeweils eine im Schiebekeilwinkel abgeschrägte Stirnfläche (83, 84) auf. Der Schiebekeilwinkel liegt z.B. zwischen 20 und 50 Winkelgraden gegenüber der Greifrichtung (9). Im Ausführungsbeispiel beträgt er 50 Winkelgrade.

Parallel zu den abgeschrägten Stirnseiten (83, 84) befinden sich jeweils zwischen einer Stirnseite (83, 84) und einem Stützsteg (85, 86), pro Längsseite des Doppelschiebekeils (81), eine Keilnut (87). Die jeweilige Keilnut (87) ist parallel zu der nächstgelegenen Stirnseite (83, 84) orientiert. Sie hat dabei einen rechteckigen Querschnitt. Der Doppelschiebekeil (81) hat somit pro Längsseite zwei Keilnuten (87). Da er zur vertikalen Mittenlängsebene des Grundkörpers (10) symmetrisch aufgebaut ist, liegt jeder Keilnut (87) einer Längsseite eine zweite gegenüber. Auf diese Weise bildet jeder stirnseitige Bereich des Doppelschiebekeils (81) einen - im Querschnitt betrachtet - schräg angeordneten T-förmigen Keilsteg (91, 92).

Jeder Keilsteg (91, 92) des Doppelschiebekeils (81) greift formschlüssig in einen in der Führungsnut (20) gelagerten Schlitten (100, 101) ein. Jeder der Schlitten ist primär ein quaderförmiger Körper, in den beidseitig Schlittenführungsnuten (105) eingearbeitet sind. Mit diesen Nuten (105) ist der einzelne Schlitten (100, 101) auf den Führungsschienen (31, 32) gleitgelagert. Die Schlitten (100, 101) sind z.B. aus dem Einsatzstahl 16MnCr5 gefertigt.

Der einzelne Schlitten (100, 101), dessen Breite z.B. 0,2 mm kleiner ist als die Breite der Führungsnut (20), hat in der dem Doppelschiebekeil (81) zugewandten Stirnfläche (103) eine schräg angeordnete T-Nut (106), mit der der Schlitten (100, 101) den Keilsteg (91, 92) des Doppelschiebekeils (81) mit einem unter 0,1 mm liegenden Spiel umgreift. Nach den Figuren 6 und 7 sind in den Grund der T-Nut (106) mit Schmiermittel befüllbare Schmiertaschen (109) eingearbeitet.

Auf der Oberseite jedes Schlittens (100, 101) befindet sich ein z.B. quaderförmiger, z.B. 2,8 mm hoher Adapteraufsatz (110), der bei montiertem Schlitten (100, 101) oben um z.B. 1,2 mm - über die Grundkörperoberseite (12) überstehend - aus der Führungsnut (20) herausragt. Zugleich steht der Adapteraufsatz (110) über die jeweils außenliegende, der T-Nut (106) abgewandten Stirnseite um z.B. 1,5 mm über. Die ebene Oberseite (102) des Adapteraufsatzes (110) hat zwei mit Zylindersenkungen ausgestattete Gewindebohrungen, an denen die Greifbacken (1, 2) lösbar befestigt werden. In den Zylindersenkungen stecken Zentrierhülsen zur präzisen, zumindest formschlüssigen Positionierung der Greifbacken (1, 2) auf den Schlitten (100, 101). Ggf. sind dort die Greifbacken (1, 2) auch direkt angeformt oder unlösbar fixiert.

Die Schlitten (100, 101) sind in der Führungsnut (20), vgl. Figur 2, so hintereinander angeordnet, dass sich bei minimalem Greifbackenabstand ihre einander zugewandten Stirnseiten (103) kontaktieren oder zumindest fast berühren.

Der mittlere Bereich der Nutöffnung der Führungsnut (20) ist mit einer z.B. rechteckigen Abdeckplatte (18) verschlossen. Die Abdeckplatte (18) ist so breit ausgelegt, dass die beiden Schlitten (100, 101), in Schließstellung der Greiferbacken (1, 2), diese gerade noch nicht berühren.

Um das Gehäuseinnere (5) und die Führungsschienen (31, 32) vor Schmutz oder sonstigen verschleißfördernden Verunreinigungen zu schützen, werden nach den Figuren 6 und 7 auf den Schlitten (100, 101) winkelförmige Führungsnutdichtungen (301, 302) aufgesetzt und festgeschraubt. Dabei umgibt die einzelne Führungsnutdichtung (301, 302) im Ausführungsbeispiel den Adapteraufsatz (110) des jeweiligen Schlittens (100, 101).

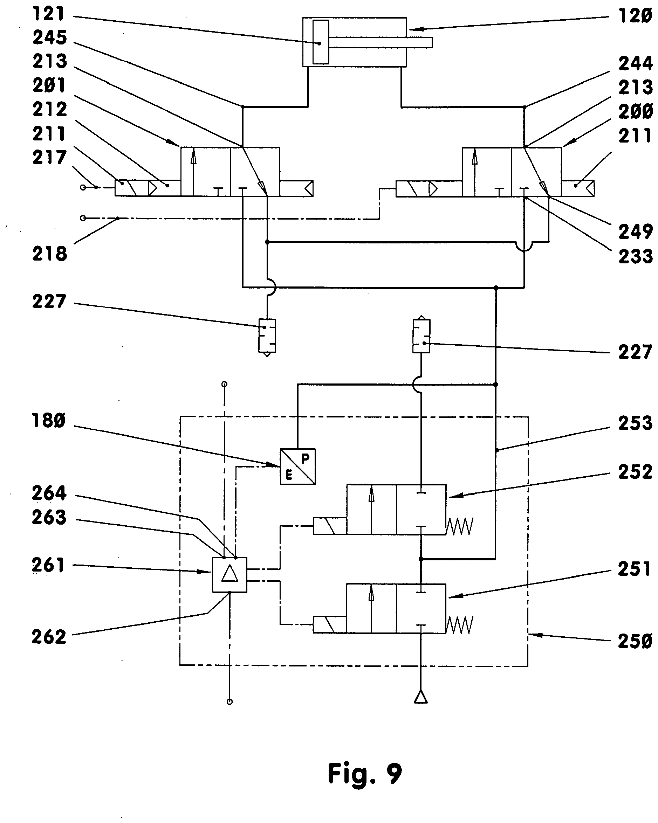

Die Figuren 8 und 9 zeigen je einen Pneumatikschaltplan für die Zylinder-Kolben-Einheit (120). Der doppeltwirkende Zylinder (120) repräsentiert den pneumatischen Aktor der Greifvorrichtung.

Um die Zylinder-Kolben-Einheit (120) pneumatisch anzusteuern, sind ihr zwei 3/2-Wegeventile (200, 201) vorgeschaltet. Die beiden z.B. baugleichen Wegeventile (200, 201), jeweils mit Sperr-Ruhestellung, sind z.B. beidseitig pneumatisch vorgesteuert (211) und durchflussseitig durch einen Elektromagnet (212) oder einen elektromechanischen Antrieb betätigbar.

An den Arbeitsanschlüssen (213) der 3/2-Wegeventile startet je eine zum Zylinder der Zylinder-Kolben-Einheit (12) führende Leitung (244, 245). Die Leitung (244) ist für den Greifhub zuständig, während die Leitung (245) den Zylinder zum Freigeben des Werkstücks (7) mit Druckluft versorgt.

Nach Figur 8 sind die beiden wegeventilseitigen Hauptzuläufe (233) am Ausgang eines z.B. ebenfalls im Schaltmodul (70) integrierten Druckbegrenzungsventils (240) angeschlossen, das wiederum über den gehäuseseitigen Druckluftanschluss (245), vgl. Figur 1, versorgt wird. Die Ventilentlüftungsbohrungen (249) der Wegeventile (200, 201) führen über gehäuseinterne Bohrungen zu einem am Modulgehäuse (71), vgl. ebenfalls Figur 1, angeordneten Entlüftungsfilter (227).

Sind die 3/2-Wegeventile (200, 201) mit Elektromagneten (212) ausgestattet, so werden diese vom Rechner- und Speichermodul (150) über die Steuerleitungen (217) oder (218) elektrisch angesteuert.

Figur 9 zeigt einen Pneumatikschaltplan, bei dem das pneumatisch arbeitende Druckbegrenzungsventil (240) durch einen elektropneumatisch wirkenden Miniaturproportionalregler (250) ersetzt wird. Der im Modulgehäuse (71) integrierte Regler (250) verfügt über zwei elektromagnetisch ansteuerbare 2/2-Wegeventile (251, 252), über die die Druckluft des Druckluftanschlusses (245), vgl. Figur 1, geregelt den Hauptzuläufen (233) der 3/2-Wegeventile (200, 201) zur Verfügung gestellt wird.

Das erste 2/2-Wegeventil (251) führt in Offenstellung über seinen Arbeitsanschluss den Hauptzuläufen (233) die Druckluft über die Leitung (253) zu. Das zweite 2/2-Wegeventil (252) entlüftet die Leitung (253) über den an seinem Arbeitsanschluss angeschlossenen Geräuschdämpfer (227). An der Leitung (253) ist die pneumatische Seite eines Drucksensors (180) angeschlossen. Im Drucksensor wird der anstehende Druck in ein elektrisches Signal gewandelt, das den Druck der Leitung (253) repräsentiert. Das Signal wird einem Verstärker (261) zugeführt und mit dem am Drucksensor (180) anstehenden Druck verglichen. Ist der gemessene Druck zu niedrig, steuert der Verstärker (261) seinen zum ersten 2/2-Wegeventil (251) führenden Ausgang auf, um das Ventil (251) zu öffnen.

Gemäß Figur 9 befinden sich die 2/2-Wegeventile (251, 252) in der Sperr-Ruhestellung. Dies ist immer dann der Fall, wenn sich der Kolben (121) der Zylinder-Kolben-Einheit (120) im Bereich einer Endlage befindet.

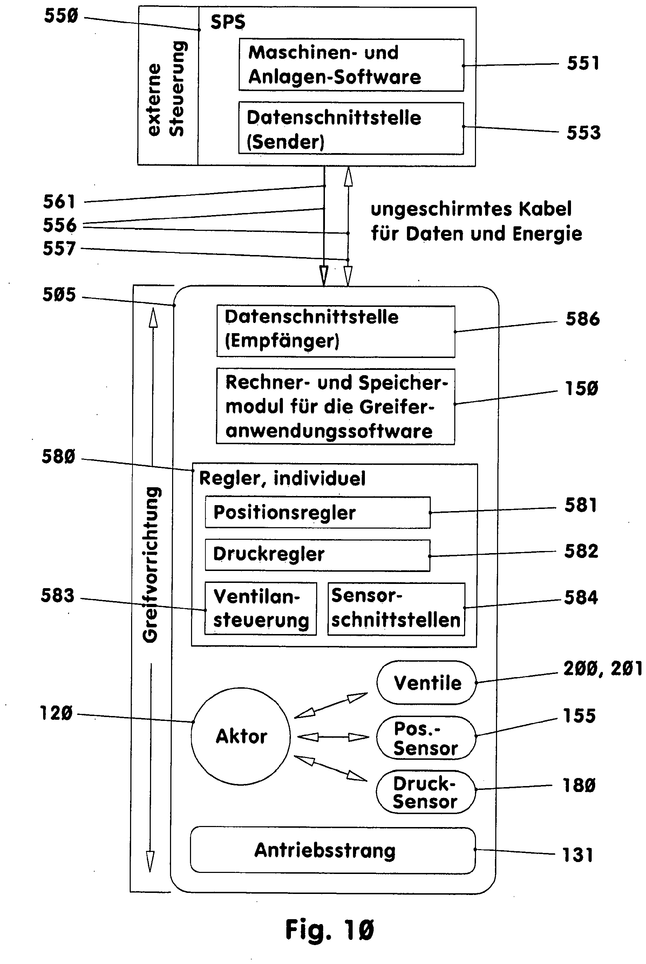

Figur 10 zeigt einen Schnittstellenlageplan der Ansteuerung der Greifvorrichtung nach Figur 1. Die Greifvorrichtung umfasst neben einer elektronischen Steuerung (150) u.a. als elektrische und/oder elektronische Baugruppen mindestens zwei Wegeventile (200, 201), pro Zylinder-Kolben-Einheit (120) zumindest einen Positionssensor (155) und mindestens einen elektrische Signale liefernden Drucksensor (180).

Die Ansteuerung verfügt über eine erste Hauptbaugruppe (550), die z.B. im Schaltschrank der Werkzeugmaschine untergebracht ist. Sie wird als "externe Steuerung" bezeichnet. Diese Hauptbaugruppe ist eine speicherprogrammierbare Steuerung (550) mit z.B. zwei SPS-Funktionsbaugruppen (551) und (553).

Die erste SPS-Funktionsbaugruppe (551) ist die Software für die Maschine und/oder Anlage. Die SPS erzeugt hier Steuersignale durch interne Mikroprozessoren abhängig von einer internen Software, die im steuerungseigenen Programmspeicher abgelegt ist.

Die zweite SPS-Funktionsbaugruppe (553) bildet eine SPS-eigene Datenschnittstelle, die mit der zweiten Hauptbaugruppe (580), der Eletronik der Greifvorrichtung (505) kommuniziert. Sie ist eine Schnittstelle für eine Punkt-zu-Punkt-Kommunikation. Ein solcher Informationsaustausch ist z.B. mittels des IO-Link®-Systems realisierbar. Das System kommt z.B. mit einer einfachen, ungeschirmten Drei- bis Fünfdrahtverbindung (557) aus.

Die Mehrdrahtverbindung (557) wird mit dem Energiekabel (561) zu einem ungeschirmten Kabel (556) zusammengefasst, das dann z.B. von fünf Adern zwei aufweist, die der Energieversorgung dienen. Das Kabel (557) ist die einzige Verbindung zwischen der SPS (550) und dem Gehäuse (10, 71) der Greifvorrichtung (505). Hier liegt also eine einfache, flexible und leicht zu handhabende Einkabelverbindung vor.

Das Kabel (557) ist in der Greifvorrichtung (505) mit der dort angeordneten Punkt-zu-Punkt-Datenschnittstelle (586) bzw. der Steuerplatine (151) verbunden. Neben der Datenschnittstelle (586) befindet sich in der Greifvorrichtung ein Rechner- und Speichermodul (150), das die gesamte Greiferanwendungssoftware umfasst. In diesem Modul werden alle für das Greifen der Werkstücke mittels dieser Greifvorrichtung (505) erforderlichen Parameter hinterlegt.

Diese Parameter sind neben den für das Greifen notwendigen Geometriedaten u.a. Werkstoffeigenschaften, die z.B. eine Funktion des E-Moduls oder einer ausgehöhlten Geometrieform sind. Beispielsweise kann bei elastischen Vollkörpern, je nach Greifgutwerkstoff, die Härte nach Shore A, B, C oder D angegeben werden, um den elastizitätsbedingten Greifhubzuschlag als geometrische Länge, in Verbindung mit der zwischen den Greifarmen (1, 2) gelegenen Einspannweite bzw. Einspannlänge, zu berechnen. Bei ausgehöhlten Geometrieformen, wie z.B. Schraubenfedern oder Kunststoffbehälter, kann die verformungsbedingte Federrate an die Stelle der Shore-Härte treten. Alternativ ist es auch möglich, der Greifvorrichtung (505) für das jeweilige Werkstück nur einen Greifkraftbereich vorzugeben.

Mit dem ansteuerbaren Aktor (120), z.B. einer Zylinder-Kolben-Einheit, und dem Positionssensor (155) steht in der Greifvorrichtung ein individuell aufgebauter Regler (580) in Verbindung, der speziell auf die Kombination aus Greiferkinematik, Aktoransteuerung und Sensor, z.B. einem Positionsgeber, abgestimmt ist.

Der individuelle Regler (580) hat als Reglerfunktionseinheit mindestens einen Positionsregler (581), der beispielsweise mit einem Lageregelkreis auskommt, da aus der von dem oder den Positionssensoren (155) gelieferten Lageänderung und der Laufzeitinformation die Hubgeschwindigkeit der Greifarme berechnet wird.

Eine zweite Reglerfunktionseinheit stellt einen Druckregler (582) dar, der mit Hilfe der Drucksensoren z.B. die Höhe des Speisedrucks und die Hubrichtung der Greifarme (1, 2) während der Laufzeit ermittelt.

Die dritte Reglerfunktionseinheit ist die Sensorschnittstelle (583) des individuellen Reglers (580). Sie ist an die Leistung und Dynamik des Aktors (120) angepasst und direkt auf mindestens einen Positionsgeber (155) und z.B. je einen Drucksensor (180) pro Hubrichtung des Aktors (120) zugeschnitten. Auch hier können Bauteile weggelassen werden, die einen universellen Zugriff auf andere Geberbauarten, wie z.B. Tachogeneratoren, Spulenresolver, optische Messsysteme und dergleichen, erlauben. Das spart Platinenbauraum und Energie ein.

Mit Hilfe der an oder in der Greifvorrichtung verbauten Sensoren (155, 180), einschließlich des Zeitgebers, kann neben dem Messen der Greifposition und dem anstehenden Druckmitteldruck zudem die Greifzeit gemessen werden. Ferner können statistische Werte, wie z.B. Anzahl der Greifvorgänge oder Höhe der Greifkräfte, gesammelt werden. Ggf. kann auch eine Frühwarnung für baldigen Funktionsverlust generiert werden. Derartige Informationen werden entweder an die SPS (550) weitergeleitet oder an der Greifvorrichtung (505) z.B. über LED's oder ein Display angezeigt.

### Bezugszeichenliste:

- 1, 2: Greifelemente, Greifbacken
- 3: Mittellinie zu (10, 70, 80)
- 4: Zylinderinnenraum
- 5: Gehäuseinnenraum, Gehäuseinneres
- 6: Maschinenschlitten, Maschinenteil, Handhabungsgeräteteil
- 7: Werkstück
- 9: Greifrichtung, Schlittenverfahrrichtung

- 10: Grundkörper, Gehäuse
- 11: Führungsabschnitt
- 12: Grundkörperoberseite
- 13: Grundkörperunterseite, Adapterfläche
- 15: Befestigungsbohrungen, vertikal
- 16: Querbohrungen
- 18: Gehäuseabdeckung, Abdeckplatte

- 20: Führungsnut
- 21: Nutseite, links
- 22: Nutseite, rechts
- 23, 24: Seitenwandungen, Führungsnutwandungen
- 26: Schienenführungsnut
- 28: Passstiftbohrungen

- 31, 32: Führungsschiene, Schlittenführungsschiene
- 37: Grundfläche, Unterseite von (31, 32); Fläche

- 41: Senkschrauben
- 42: Passstifte

- 51: Antriebsabschnitt
- 55: Zylinderausnehmung, oval
- 56: Dichtsitzvertiefung für Flachdichtung

- 61: Durchgangsbohrung, mittig
- 65: Modulgehäuseausnehmung
- 66: Sensorausnehmungen
- 68: Vertiefung in (71)
- 69: Befestigungsbohrungen in (71)

- 70: Schaltmodul
- 71: Modulgehäuse
- 72: Oberseite, Adapterfläche
- 73: Unterseite, Adapterfläche
- 74: Ausnehmung
- 75: Seitendeckel, Plexiglasdeckel
- 76: Haltedeckel
- 77: Deckelblende
- 78: Frontdeckel
- 79: Flachdichtung

- 80: Doppelschiebekeilgetriebe
- 81: Doppelschiebekeilelement, Doppelschiebekeil, Getriebebauteil
- 83, 84: Stirnseiten, Stirnflächen, schräg
- 85, 86: Stützstege
- 87: Keilnut
- 91, 92: Keilsteg, T-förmig
- 95: Senkbohrung
- 96: Gewindebohrung

- 100, 101: Schlitten
- 102: Oberseite
- 103: Stirnseite, Stirnfläche
- 105: Schlittenführungsnuten
- 106: T-Nut
- 107: Keilflächen, Öffnungsanlage
- 108: Keilflächen, Schließanlage
- 109: Schmiertaschen

- 110: Adapteraufsatz
- 115: Gewindebohrung für (300)
- 118: Schraube für (300)

- 120: Zylinder-Kolben-Einheit; Antrieb, Aktor pneumatisch, doppeltwirkend
- 121: Kolben, oval
- 122: Kolbenbodenseite
- 123: Kolbenstangenseite
- 124: Vorsprung, scheibenförmig, Anschlag
- 125: Vorsprung, kolbenbodenseitig, zylindrisch
- 126: Sacklochbohrungen für (136)
- 127: Druckausgleichsbohrung

- 131: Kolbenstangenhülse, Kolbenstange; Antriebsstrang
- 132: Kolbenstangenschraube, Kolbenstange
- 135: Durchgangsbohrung
- 136: Scheibenmagnete, Auslöser für (155)

- 150: Rechner- und Speichermodul für die Greiferanwendungssoftware, elektronische Steuerung
- 151: Steuerplatine
- 155: Positionsgeber, analog; Kolbenpositionssensor
- 157: elektrischer Anschluss z.B. mit Kabelzugentlastungselement
- 158: Kabel für Laststrom und Signalstrom; vgl. (556)
- 180: Drucksensor mit elektrischem Signalausgang

- 200, 201: Wegeventile, 3/2-Wegeventile
- 211: pneumatische Vorsteuerung, beidseitig
- 212: Elektromagnet, Hubmagnet
- 213: Arbeitsanschlüsse an (200, 201)
- 217, 218: Steuerleitung, elektrisch

- 227: Geräuschdämpfer, Entlüftungsfilter

- 233: Hauptzulauf an (200, 201)

- 240: Druckbegrenzungsventil
- 244, 245: Druckluftanschluss, Druckmittelanschluss
- 246: Druckluftleitung, Druckluftschlauch
- 249: Ventilentlüftungsbohrung für (200, 201)

- 250: Proportionalregler, Miniaturproportionalregler
- 251: 2/2-Wegeventile, Zulauf
- 252: 2/2-Wegeventile, Rücklauf
- 253: Leitung
- 261: Verstärker
- 262: Eingang des Referenzdrucks
- 263: Ausgang des Istdrucks
- 264: Eingang des Istdrucks

- 301, 302: Führungsnutdichtungen

- 505: Greifvorrichtung, Parallelgreifer
- 550: erste Hauptbaugruppe, externe Steuerung, speicherprogrammierbare Steuerung = SPS
- 551: erste SPS-Funktionsbaugruppe, Maschinensoftware
- 553: zweite SPS-Funktionsbaugruppe, Datenschnittstelle für Punkt-zu-Punkt-Kommunikation
- 556: ungeschirmtes Kabel für Daten und Energie zwischen (550) und (505); vgl. (158)
- 557: Drei- bis Fünfdrahtverbindung, Mehrdrahtverbindung, ungeschirmt
- 561: Energiekabel

- 580: zweite Hauptbaugruppe, Regler, individuell
- 581: erste Reglerfunktionseinheit, Positionsregler
- 582: zweite Reglerfunktionseinheit, Druckregler
- 583: dritte Reglerfunktionseinheit, Sensorschnittstellen
- 584: Sensorschnittstellen
- 586: Datenschnittstelle für Punkt-zu-Punkt-Kommunikation

## Patentansprüche

1. Greifvorrichtung umfassend
- einen Grundkörper (10);
- mindestens zwei Greifelemente (1, 2);
- mindestens eine Zylinder-Kolben-Einheit (120);
- zwei der Zylinder-Kolben-Einheit (120) vorgeschaltete und jeweils einen Hauptzulauf (233) aufweisende Wegeventile (200, 201), um die Zylinder-Kolben-Einheit (120) pneumatisch anzusteuern;
- mindestens zwei Schlitten (100, 101) oder Schwenkarme, die die Greifelemente tragen, wobei die Schlitten (100, 101) oder Schwenkarme in dem Grundkörper (10) zwischen einer Öffnungs- und Schließstellung gelagert sind und geführt werden und mittels der mindestens einen Zylinder-Kolben-Einheit (120) angetrieben werden;
- mindestens einen Sensor (155,180), der zumindest im oder am Grundkörper (10) oder im Modulgehäuse (71) angeordnet ist und mindestens eine physikalische Kenngröße von den Schlitten (100, 101) und/oder der Zylinder-Kolben-Einheit (120) erfasst;
- ein am Grundkörper (10) in einem Modulgehäuse (71) untergebrachtes elektrisch ansteuerbares Schaltmodul (70),
- wobei das Modulgehäuse (71) mindestens einen Druckmittelanschluss (245) und mindestens einen elektrischen Anschluss (157), der sowohl Last- als auch Steuerleitungen umfasst, aufweist,
- wobei im Schaltmodul (70) die mindestens zwei Wegeventile (200, 201) und mindestens ein elektronisches Rechner- und Speichermodul (150) zur Umsetzung externer und interner Steuersignale sowie deren Auswertung angeordnet ist, wobei die internen Steuersignale von dem mindestens einem Sensor (155, 180) stammen;
**gekennzeichnet durch**
einen den jeweils einen Haupfzulauf (233) aufweisenden Wegeventilen (200, 201) vorgeschalteten Proportionalregler (250), der einen Druckregler (582), einen elektrische Signale erzeugenden Drucksensor (180), einen Verstärker (261) und mindestens zwei elektrisch ansteuerbare Wegeventile (251, 252) aufweist.

2. Greifvorrichtung gemäß Anspruch 1, **dadurch gekennzeichnet, dass** der Grundkörper (10) eine primäre Adapterfläche (13) hat, an der das Schaltmodul (70) über seine Adapterfläche (72) adaptiert ist.

3. Greifvorrichtung gemäß Anspruch 2, **dadurch gekennzeichnet, dass** das Schaltmodul (70) an seiner vom Grundkörper (10) abgewandten Unterseite eine der Adapterfläche (13) des Grundkörpers (10) ganz oder zumindest teilweise entsprechende moduleigene maschinenseitige Adapterfläche (73) hat.

4. Greifvorrichtung gemäß Anspruch 1, **dadurch gekennzeichnet, dass** der Sensor (155) als physikalische Kenngrößen, alternativ oder in Kombination, zumindest Position, Weg, Geschwindigkeit und Beschleunigung des Schlittens erfasst.

5. Greifvorrichtung gemäß Anspruch 1, **dadurch gekennzeichnet, dass** das Rechner- und Speichermodul (150) des Schaltmoduls (70) einen Zeitgeber aufweist.

6. Greifvorrichtung gemäß der Ansprüche 1 oder 4, **dadurch gekennzeichnet, dass** das Rechner- und Speichermodul (150) zumindest einen Teil der erfassten physikalischen Kenngrößen in optische oder akustische Signale umwandelt, um sie am Modulgehäuse (71) über mindestens eine Anzeige- oder Wiedergabevorrichtungen bereitzustellen.

7. Greifvorrichtung gemäß Anspruch 1,**dadurch gekennzeichnet, dass** die Wegeventile (200, 201) jeweils eine Sperr-Ruhestellung haben und beidseitig pneumatisch oder hydraulisch vorgesteuert sind.

8. Greifvorrichtung gemäß Anspruch 1, **dadurch gekennzeichnet, dass** die Wegeventile (200, 201) Patronenventile sind.

## Claims

1. Gripping device comprising
- a base body (10);
- at least two gripping elements (1, 2);
- at least one cylinder-piston unit (120);
- two directional valves (200, 201) upstream from the cylinder-piston unit (120) and each comprising a main infeed (233) to pneumatically control the cylinder-piston unit (120);
- at least two sliders (100, 101) or swivel arms that support the gripping elements, wherein the sliders (100, 101) or swivel arms are mounted and guided within the base body (10) between an open and closed position and are driven by means of at least one cylinder-piston unit (120);
- at least one sensor (155, 180), which is arranged at least in or on the base body (10) or in the module housing (71) and detects at least one physical characteristic of the sliders (100, 101) and/or the cylinder-piston unit (120);
- an electrically controllable switch module (70) accommodated on the base body (10) in a module housing (71),
- wherein the module housing (71) comprises at least one pressure medium connection (245) and at least one electrical connection (157), which comprises both load as well as control lines,
- wherein the at least two directional valves (200, 201) and at least one electronic computer and memory module (150) are arranged in the switch module (70) for the implementation of external and internal control signals and their evaluation, wherein the internal control signals originate from the at least one sensor (155, 180);
**characterized by**
a proportional controller (250) upstream to the directional valves (200, 201) each comprising a main infeed (233), which proportional controller (250) comprises a pressure regulator (582), an electrical signal-generating pressure sensor (180), an amplifier (261) and at least two electrically controllable directional valves (251, 252).

2. Gripping device according to Claim 1, **characterized in that** the base body (10) has a primary adapter surface (13) to which the switch module (70) is adapted via its adapter surface (72).

3. Gripping device according to Claim 2, **characterized in that** the switch module (70) has a module-specific machine-side adapter surface (13) on its underside facing away from the base body (10), thereby completely or at least partially corresponding to the adapter surface (73) of the base body (10).

4. Gripping device according to Claim 1, **characterized in that** the sensor (155) detects at least position, path, speed and acceleration of the slider as physical parameters, alternatively or in combination.

5. Gripping device according to Claim 1, **characterized in that** the computer and memory module (150) of the switch module (70) comprises a timer.

6. Gripping device according to Claims 1 or 4, **characterized in that** the computer and memory module (150) converts at least one part of the detected physical parameters into optical or acoustic signals to provide them on the module housing (71) via at least one display or playback device.

7. Gripping device according to Claim 1, **characterized in that** the directional valves (200, 201) each have a lock/rest position and are pneumatically or hydraulically pre-controlled on both sides.

8. Gripping device according to Claim 1, **characterized in that** the directional valves (200, 201) are cartridge valves.

## Revendications

1. Dispositif de préhension comprenant
- un corps de base (10) ;
- au moins deux éléments de préhension (1, 2) ;
- au moins une unité vérin-piston (120) ;
- deux distributeurs (200, 201) montés en amont de l'unité vérin-piston (120) et comportant respectivement une arrivée principale (233) pour piloter pneumatiquement l'unité vérin-piston (120) ;
- au moins deux chariots (100, 101) ou bras pivotants, qui portent les éléments de préhension, sachant que les chariots (100, 101) ou bras pivotants sont logés et sont guidés dans le corps de base (10) entre une position d'ouverture et une position de fermeture et sont entraînés au moyen d'au moins une unité vérin-piston (120) ;
- au moins un capteur (155, 180), qui est disposé au moins dans ou sur le corps de base (10) ou dans le boîtier modulaire (71) et saisit au moins une valeur caractéristique physique des chariots (100, 101) et/ou de l'unité vérin-piston (120) ;
- un module de connexion (70) pilotable électriquement placé sur le corps de base (10) dans un boîtier modulaire (71),
- sachant que le boîtier modulaire (71) comporte au moins un raccord de moyen de pression (245) et au moins une connexion électrique (157), qui comprend aussi bien des conduits de charge que de commande,
- sachant que dans le module de connexion (70), sont disposés au moins deux distributeurs (200, 201) et au moins un module de calcul et de mémorisation électronique (150) pour la conversion des signaux de commande externes et internes ainsi que pour leur évaluation, sachant que les signaux de commande internes proviennent d'au moins un capteur (155, 180) ;
**caractérisé par**
un régulateur proportionnel (250) monté en amont respectivement de distributeurs (200, 201) comportant une arrivée principale (233), qui comporte un régulateur de pression (582), un capteur de pression (180) produisant des signaux électriques, un amplificateur (261) et au moins deux distributeurs (251, 252) pilotables électriquement.

2. Dispositif de préhension selon la revendication 1, **caractérisé en ce que** le corps de base (10) possède une surface d'adaptateur (13) primaire à laquelle le module de connexion (70) est adapté par sa surface d'adaptateur (72).

3. Dispositif de préhension selon la revendication 2, **caractérisé en ce que** le module de connexion (70) possède sur sa face inférieure opposée au corps de base (10) une surface d'adaptateur (73) côté machine, propre au module, correspondant entièrement ou au moins en partie, à la surface d'adaptateur (13) du corps de base (10).

4. Dispositif de préhension selon la revendication 1, **caractérisé en ce que** le capteur (155) saisit en tant que valeurs caractéristiques physiques, alternativement ou en combinaison, au moins la position, la course, la vitesse et l'accélération du chariot.

5. Dispositif de préhension selon la revendication 1, **caractérisé en ce que** le module de calcul et de mémorisation (150) du module de connexion (70) comporte un rythmeur.

6. Dispositif de préhension selon les revendications 1 ou 4, **caractérisé en ce que** le module de calcul et de mémorisation (150) convertit au moins en partie une partie des valeurs caractéristiques physiques saisies en signaux optiques ou acoustiques pour les mettre à disposition sur le boîtier modulaire (71) par le biais d'au moins un dispositif d'affichage ou un dispositif de reproduction.

7. Dispositif de préhension selon la revendication 1, **caractérisé en ce que** les distributeurs (200, 201) possèdent respectivement une position de repos de blocage et sont pilotés des deux côtés pneumatiquement ou hydrauliquement.

8. Dispositif de préhension selon la revendication 1, **caractérisé en ce que** les distributeurs (200, 201) sont des soupapes à cartouche.
